# EUROPÄISCHE PATENTANMELDUNG

(11) **EP 4 083 432 A1**
(43) Veröffentlichungstag der Anmeldung: **02.11.2022**
(21) Anmeldenummer: 22178082.8
(22) Anmeldetag: 04.03.2021
(51) Int. Cl.: F04D 17/06, F04D 17/16, F04D 19/00, F04D 29/30, F04D 29/38, F04D 29/66

(54) **VENTILATOR UND VENTILATORFLÜGEL**

(30) Priorität: 10.03.2020 DE 102020106534
(62) Teilanmeldung aus: 21710256.5
(71) Anmelder: ebm-papst Mulfingen GmbH & Co. KG, 74673 Mulfingen (DE)
(72) Erfinder: Schneider, Marc, 74677 Dörzbach (DE); Lucius, Andreas, 74523 Schwäbisch Hall (DE); Lehmann, Marius, 74632 Neuenstein (DE)
(74) Vertreter: Staeger & Sperling Partnerschaftsgesellschaft mbB

(57) **Zusammenfassung**

Die Erfindung betrifft einen Ventilatorflügel (1) mit einer vorderen Anströmkante (2) und einer hinteren Abströmkante (3), wobei der Ventilatorflügel (1) eine zumindest teilweise gewellte Anströmkante (4) aufweist, wobei diese eine Welle (W) mit einer spezifischen dreidimensionalen Wellenform ausbildet.

## Beschreibung

Die vorliegende Erfindung betrifft einen Ventilator und einen Ventilatorflügel, insbesondere für einen Radialventilator.

Ventilatoren werden zum Beispiel in Wärmetauschern saugend über das Tauscherpaket eingesetzt. Damit wird jedoch die Zuströmung zum Ventilator stark turbulent. Die turbulente Zuströmung zum Ventilator führt zu einer deutlichen Erhöhung der Schallabstrahlung, das bedeutet zu einer störenden Geräuschentwicklung. Zur Charakterisierung der Zuströmung kann man messtechnisch den Turbulenzgrad Tu und das sogenannte turbulente Längenmaß Λ bestimmen. Der Turbulenzgrad ist das Verhältnis von Schwankungsgröße der Geschwindigkeit zum Mittelwert. Das turbulente Längenmaß ist die mittlere Abmessung der turbulenten Strukturen. Es entspricht der Weglänge, über die Geschwindigkeitsfluktuationen miteinander korreliert sind. Der Wärmetauscher ist im Wesentlichen aus Rohren mit Lamellen aufgebaut.

Bei aktuellen Ventilatoren oder Lüfterrädern ermöglichen strömungsmechanisch günstig geformte Ventilatorflügel eine hohe Leistungsfähigkeit insbesondere hinsichtlich des erreichten Durchströmvolumens oder des Druckaufbaus. Grundsätzlich besteht ein Bedürfnis nach geräuscharmen Ventilatoren bei gleichzeitig guter Aerodynamik, trotz turbulenter Anströmung. Problematisch bleibt dabei jedoch häufig eine starke Geräuschentwicklung im Betrieb eines Ventilators. Die Geräusche entstehen dann, wenn die turbulente Zuströmung auf den Ventilatorflügel trifft.

Im Stand der Technik gibt es diverse konstruktive Maßnahmen, um diese Probleme zu reduzieren. Die Druckschrift DE 19948075 A verwendet zur Reduzierung des Laufgeräuschs einen Axialventilator mit Flügeln, die eine doppelt gesichelte, voreilende Flügelkante mit einem vorstehenden äußeren Eck aufweisen. Die US 3416725 A zeigt eine Flügelform mit einer doppelt gesichelten Anströmkante und einer leicht einfach gesichelten Abströmkante.

Die DE 10326637 B3 beschreibt eine weitere Lösung, nämlich einen Lüfter mit wechselnder Drehrichtung, der S-förmig gesichelte Flügel mit nach außen hin stark zurückweichender Anströmkante aufweist. Die WO 1998005868 A1 offenbart ein numerisches Verfahren zur aeroakustischen Optimierung eines Axiallüfters bzw. seiner Blattgeometrie und die US 2649921 stellt einen Lüfter mit sehr kurzen und breiten Flügeln und dreifach geschwungenen Anström- und Abströmkanten bereit. Weiter offenbart die US 5533865 A einen Rotor für ein Windrad, dessen Flügel sägezahnförmige Abströmkanten aufweisen. Gezackte oder gewellte Abströmkanten werden zur Reduktion des Abström-kantenschalls verwendet (z.B. GB 2497739 oder EP 1801422 A2). Die DE 102009044824 A1 verwendet Porositäten in Form von Löchern im Bereich der Abströmkante zur Reduktion der Schallentstehung an der Abströmkante.

Bei turbulenter Zuströmung ist der Schall, der an der Abströmkante entsteht jedoch von untergeordneter Bedeutung gegenüber der Schallentstehung an der Anströmkante.

Gewellte oder gezackte Anströmkanten sind als Mittel zur Reduktion des Geräusches bei turbulenter Anströmung ebenfalls bekannt. Die US 6431498 B1 beschreibt eine wellige Anströmkante, die durch verschiedene Schnitte in spannweitiger Richtung entsteht. Dabei wird der vordere Bereich bis zum Dickenmaximum in Sehnenrichtung verlängert. Die US 9249 666 B2 beschreibt eine alternative Gestaltung der Welle auf der Anströmkante, bei der das Profil nicht in Sehnenrichtung verlängert wird, sondern zur Druck oder zur Saugseite das Referenzprofil verlässt. Eine spezielle Anströmkantenwelle in Form eines Doppelsinus wird in EP 3121 376 B1 beschrieben. Die WO2013/180296 verwendet gezackte Anströmkanten mit dreieckiger Form. Die Druckschrift DE 102017212231 A1 beschreibt eine Kombination von gewellter Anströmkante mit gewellter Abströmkante. Die Wellen auf der Anströmkante haben größere Wellenlängen im Vergleich zur Abströmkante.

Das Wellental ist ein wichtiger Ort der Schallentstehung bei gewellten oder gezackten Anströmkanten. Weitere Schriften befassen sich mit Modifikationen der Schaufel im Bereich des Tals. Die JP6409666B2 verwendet zusätzliche Leitelemente auf der Schaufel im Bereich des Tals. In JP5978886B2 wird eine Aussparung der gezackten Anströmkante im Tal beschrieben.

Vor diesem technischen Hintergrund befasst sich die Erfindung mit dem Problem, einen insbesondere bei turbulenter Zuströmung geräuscharm arbeitenden Ventilator bzw. Ventilatorflügel bereitzustellen, der gleichzeitig gute aerodynamische Eigenschaften aufweist.

Die Erfindung löst dieses Problem mit einem Ventilator gemäß den unabhängigen Ansprüchen. Die abhängigen Ansprüche enthalten vorteilhafte Ausgestaltungen.

Bevor die Erfindung näher beschrieben wird, werden zum besseren Verständnis der Erfindung einige Begriffe und die verwendete Terminologie erläutert. Dazu betrachtet man einen typischen Radialventilator mit meist mehreren, über dem Umfang angeordneten Ventilatorflügeln zum strömungstechnischen Saugen und/oder Drücken der den Ventilator umgebenden Luft oder ein vom Ventilator zu förderndes Gas. Die Ventilatorflügel können untereinander durch eine Bodenscheibe oder eine Deckscheibe oder beides miteinander verbunden sein.

Ferner weist jeder Ventilatorflügel eine radial innere Anströmkante und eine radial äußere Abströmkante auf. Ferner gibt es abhängig von der Drehrichtung und dem Ventilatorflügelprofil eine Saugseite und eine Druckseite, wobei die Druckseite im Betrieb des Ventilators in bestimmungsgemäßer Drehrichtung der Saugseite voraneilt. Insofern besitzt der Ventilatorflügel eine Saugseite, die im Betrieb die anströmende Luft ansaugt, sowie eine der Saugseite gegenüberliegende Druckseite, auf der sich der Druck zum Ausstoßen der Luft aufbaut.

Der erfindungsgemäße Ventilator zeichnet sich gegenüber einem vergleichbaren konventionellen Ventilator durch einen geräuschreduzierten Betrieb bei turbulenter Zuströmung aus. Wie oben schon erwähnt, verwendet ein erfindungsgemäßer Ventilator wenigstens einen erfindungsgemäßen Ventilatorflügel, wobei dieser durch eine spezielle Gestalt eine gegenüber vergleichbaren konventionellen Ventilatoren verminderte Geräuschbildung im Betrieb erzielt.

Der Mechanismus der erhöhten Schallentstehung beruht darauf, dass die turbulente Anströmung mit einer zeitlichen Änderung der Anströmung des Ventilators verbunden ist. Die Turbulenz führt zu zeitlichen Schwankungen der am Flügel auftretenden Kräfte, wodurch eine entsprechende schwingungsartige Schallabstrahlung ausgelöst wird. Von besonderer Bedeutung ist die Intensität solcher Fluktuationen. Je höher der Turbulenzgrad bei der Anströmung und damit die Fluktuation der relevanten Strömungsgrößen in der Anströmung des Ventilators, desto stärker bildet sich eine Schallabstrahlung aus oder anders ausgedrückt, desto lauter nimmt man den Betrieb eines solchen Ventilators wahr.

Untersuchungen von diversen Modifikationen von vorderseitigen Anströmkanten von Flügelprofilen in turbulenter Zuströmung zeigen positive akustische Effekte, wenn man die Anströmkante gewellt oder mit einer wellenartigen Zackenform ausführt. Es konnte erfindungsgemäß erkannt werden, dass der wesentliche Mechanismus der zur Reduktion der abgestrahlten Schallabstrahlung führt, derjenige ist, dass eine Dekorrelation der Quellen auf der Schaufel erfolgt. Eine turbulente Zuströmung erscheint chaotisch, ist jedoch nicht vollkommen chaotisch, sondern korreliert zu geometrischen Faktoren. Das zuvor genannte Längenmaß Λ ist die Weglänge, über die eine konkrete Korrelation der turbulenten Fluktuationen festgestellt werden kann.

Untersuchungen zeigen jedoch, dass akustisch wirksame gewellte Anströmkanten aerodynamisch schlechtere Eigenschaften aufweisen, so dass man zunächst davon abgehalten wird, solche Formen auszubilden. Die vorliegende Erfindung zielt auf eine spezifische Ausgestaltung der Anströmkantenwelle ab, die akustisch und aerodynamisch vorteilhaft ist. Es hat sich nämlich erfindungsgemäß gezeigt, dass die Ausbildung einer ganz bestimmten Wellenform besonders vorteilhaft ist.

Ein Grundgedanke der Erfindung besteht darin, dass die Anströmkante zumindest abschnittsweise eine spezifische dreidimensionale wellenförmige Ausprägung besitzt bzw. dreidimensional wellenförmig ausgebildet ist. Die spezielle Ausgestaltung der Welle unterscheidet sich deutlich vom Stand der Technik. Weiter vorteilhaft ist es, wenn die gewellte Anströmkante ferner mit einer Porosität ausgestaltet ist. Erfindungsgemäß ist ein Ventilatorflügel mit einer Anströmkante und einer Abströmkante vorgesehen, wobei der Ventilatorflügel zumindest in einem Teilbereich eine gewellte Anströmkante mit einer sich periodisch wiederholenden Wellenform der Periodenlänge A aufweist, die abweichend von einer sinusförmigen oder nahezu sinusförmigen Wellenform insbesondere abweichend von einer sinusförmigen oder nahezu sinusförmigen Wellenform mit gleicher Periodenlänge λ ist.

Die Periode (Perdiodenlänge) ist bei einer sich regelmäßig wiederholenden physikalischen Erscheinung der kleinste örtliche Abstand, nach dem sich die Erscheinung wiederholt.

Weiter vorteilhaft ist es, wenn die gewellte Anströmkante hierzu zwei oder mehrere sich periodisch wiederholende Wellenformen aufweist. Der erfindungsgemäße Effekt tritt dann auf, wenn die gewünschte Wellenform über mehrere Perioden ausgebildet ist.

Somit können abwechselnd Wellentäler und Wellenberge an der Vorderkante d. h. der Anströmkante entlang ausgebildet sein, die in einer bestimmten Periodizität vorgesehen sind.

Aus experimentellen Versuchen wurde der optimale Bereich von Wellenlänge und Amplitude ermittelt, der sowohl aerodynamisch als auch gleichzeitig akustische Verbesserungen bringt. Der sogenannte Spitze-Tal-Wert H der Welle ist der Abstand vom höchsten Punkt zum tiefsten Punkt. Für einen Fokus auf die Reduktion der Schallleistung werden tendenziell Wellen mit großer Höhe (großem Spitze-Tal-Wert H) und kleinere Wellenlängen verwendet (kleines λ/H). Für eine Reduktion der Aufnahmeleistung sind kleine Spitze-Tal-Werte H und größere Wellenlängen von Vorteil (größeres λ/H). Bezogen auf den Laufraddurchmesser D sind bevorzugte Spitze-Tal-Werte H im Bereich von 0,01 ≤ H/D ≤ 0,1 vorteilhaft.

In einer entsprechend vorteilhaften Ausgestaltung der Erfindung ist vorgesehen, dass der Spitze-Tal-Wert H der Wellentäler von der Vorderkante in diesem Bereich der gewellte Anströmkante bis zum jeweiligen Wellental (in Strömungsrichtung betrachtet) definiert ist und Werte für das Verhältnis zwischen der Periodenlänge λ und dem Spitze-Tal-Wert H im Bereich 0,2 ≤ λ/H ≤ 2 liegen, wobei die Werte entlang der Anströmkante variieren können.

Als besonders effektiv hat sich eine Lösung erwiesen, bei der eine von einer Sinusform abweichende Wellenform mit jeweils tief eingeschnittenen Wellentälern je Periode, d. h. ausreichend groß ausgeprägten Wellentälern vorgesehen ist. Hierzu kann vorgesehen sein, dass die Amplitude bzw. der Spitze-Tal-Wert einen bestimmten Wert gegenüber der Sehnenlänge des Ventilatorflügels haben sollte. Leicht ausgeprägte oder nur sinusförmige Wellentäler haben sich nicht als ausreichend wirkungsvoll gezeigt. Vielmehr soll der Spitze-Tal-Wert der Wellentäler im Bereich der gewellten Anströmkante vorzugsweise ca. 10% - 30% der Sehnenlänge SL betragen, weiter vorzugsweise 10% bis 20% der Sehnenlänge SL. Gegenüber einer gedachten Sinuswelle mit gleicher Periodenzahl soll der Spitze-Tal-Wert daher größer sein, was zu steileren Flanken gegenüber der Strömungsrichtung im Wellental führt.

Bevorzugt ist es daher, wenn die sich wiederholende Wellenform pro Periode wenigstens ein Wellental mit zwei aufeinander zu und jeweils schräg zur Strömungsrichtung verlaufenden "steilen" Wellenflanken ausbildet. Hierbei ist es besonders vorteilhaft, wenn die in diesem Bereich der Anströmkante schräg zum Wellental verlaufenden (seitliche) Wellenflanken (insbesondere in einem Abschnitt nahe der Flankenmitte) gegenüber der Strömungsrichtung unter einem Tangentialwinkel β zwischen 15° und 35°, vorzugsweise einem Tangentialwinkel β von 25° bis 30° verlaufen.

Dies bedingt auch einen wesentlich stärkeren Krümmungsverlauf im Wellental einer erfindungsgemäßen Wellenform gegenüber dem Krümmungsverlauf in einem sinusförmigen Wellental.

In einem weiteren alternativen Ausführungsbeispiel bildet die sich wiederholende Wellenform (d.h. die Wellenform die periodisch angeordnet ist) zwei nebeneinander liegende Wellentäler mit einem dazwischen liegenden Wellenberg, der sich entgegen der Strömungsrichtung in Richtung der anströmseitigen Vorderkante erstreckt. Die beiden seitlichen Flanken, die diese Wellenform begrenzen, verlaufen entsprechend schräg, wie zuvor erläutert.

Erfindungsgemäß kann für die Konstruktion der Welle folgendermaßen vorgegangen werden, dass nämlich die Wellenform im Bereich der gewellten Anströmkante zumindest abschnittsweise oder vollständig durch mehrere insbesondere sechs gemeinsame Schnittpunkte (Stützpunkte) mit einer gedachten Sinuswelle verläuft, in ihrer Form jedoch von einer Sinuswelle abweicht.

In dem alternativen Ausführungsbeispiel bei dem zwischen zwei Wellentälern ein Wellenberg liegt, beträgt der Spitze-Tal-Wert h2 eines solchen Wellenbergs betragsmäßig etwa 10% bis 80% des Spitze-Tal-Werts H des oder der unmittelbar benachbarten Wellenberge.

Zusätzlich ist es günstig, die gewellte Anströmkante etwa in der Mitte einer Periode d. h. bei halber Wellenlänge lokal an die Strömung anzupassen. Dazu wird ein Versatz der Anströmkante senkrecht zur Mittellinie zwischen Druckseite und Saugseite des Flügels eingeführt. Dieser Versatz verbessert die Anströmung der Anströmkante und hilft Strömungsablösungen in diesem Bereich zu vermeiden. Bevorzugt wird dieser Versatz Richtung der Saugseite ausgeführt. Insofern ist es vorteilhaft, wenn auch das Flügelprofil zusätzlich zur gewellten Anströmkante eine spezifische, insbesondere wellige Struktur in bestimmten Abschnitten aufweist. Hierzu kann das Flügelprofil (in einem Profilschnitt im Bereich eines Wellenbergs betrachtet) jeweils eine auf der Druckseite (DS) hervorstehende Beule und eine Delle an der korrespondierenden gegenüberliegenden Position der Saugseite (SS) ausbilden, deren Oberflächenverlauf jeweils so definiert ist, dass in Strömungsrichtung (V) betrachtet die Oberflächenkrümmung zweimal wechselt. Sofern der Oberflächenverlauf an der Oberseite (Druckseite) mit dem gegenüberliegenden Oberflächenverlauf an der Unterseite (Saugseite) in etwa korrespondiert besitzt das Flügelprofil eine etwa gleichbleibende Dicke, wölbt sich aber an der Druckseite etwas hervor.

Eine weitere Verbesserung kann darin liegen, dass sich das Flügelprofil stirnseitig im Bereich der Anströmkante (in einem Profilschnitt betrachtet) weiter zur Saugseite hin krümmt im Vergleich zu dem oder einem daneben benachbarten weniger zur Saugseite hin gekrümmten Bereich. Dadurch wird eine spezifische zusätzliche wellige Struktur des Flügels vorzugsweise mit einem Abstand einer Periode, weiter vorzugsweise von Periodenmitte zu Periodenmitte erzielt.

Eine zusätzliche Verbesserung des Geräuschverhaltens kann dadurch erzielt werden, dass der Ventilatorflügel im Bereich der Anströmkante mit einer Vielzahl durch den Ventilatorflügel von der Druckseite zur Saugseite durchgehenden Kanälen ausgebildet ist (Bereich mit Porosität). Durch die Verwendung von Porositäten im Bereich der mit der Turbulenz interagierenden Schaufelkanten kann eine weitere Reduktion der Schallabstrahlung erreicht werden, wobei diese durch Löcher bzw. durch Schlitze geformt sein können. Dabei handelt es sich um durchgehende Öffnungen, die einen Druckausgleich zwischen der Saug- und der Druckseite des Ventilatorflügels ermöglichen. Der Lochdurchmesser bzw. die Breite der Schlitze nehmen in einer bevorzugten Ausgestaltung Werte in einem Bereich bis ca. 2 mm an. Der poröse Bereich umfasst bevorzugt nur einen Teilbereich der Anströmkante wobei der Teilbereich geringer bis etwa 20 % der Schaufellänge ist.

Besonders vorteilhaft ist eine Kombination aus mehreren erfindungsgemäßen geometrischen Gestaltungselementen, wobei jeweils die erfindungsspezifischen Besonderheiten zu berücksichtigen sind. So ist zum Beispiel eine Kombination aus Porosität und dreidimensional ausgestalteter Welle im Bereich der Anströmkante möglich.

Die vorliegende Erfindung betrifft insbesondere einen Radialventilator, welcher einen oder mehrere wie zuvor beschriebene Ventilatorflügel aufweist.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig. 1: einen Ventilatorflügel mit abschnittsweise gewellter Anströmkante;
- Fig. 2: eine Detailansicht eines Profilschnitts B durch den Ventilatorflügel im Berg der Anströmkantenwelle zur Erläuterung der S-Förmigkeit;
- Fig. 3: eine schematische Ansicht einer Sinus-Wellenform einer Welle an der Anströmkante und einer dazu modifizierten Wellenform, die durch Stützpunkte der Sinuswelle verläuft, Variante mit Umkehrpunkten und tiefer eingeschnittenem Wellental;
- Fig. 4: eine schematische Ansicht einer Sinus-Wellenform einer Welle an der Anströmkante und einer dazu modifizierten Wellenform, die durch Stützpunkte der Sinuswelle verläuft, Variante mit zusätzlichem Wellenberg in der Mitte der Welle;
- Fig. 5: eine Detailansicht des Profilschnitts C aus durch den Ventilatorflügel gemäß Figur 1;
- Fig. 6: einen beispielhaften Radialventilator aufweisend sieben Ventilatorflügel.

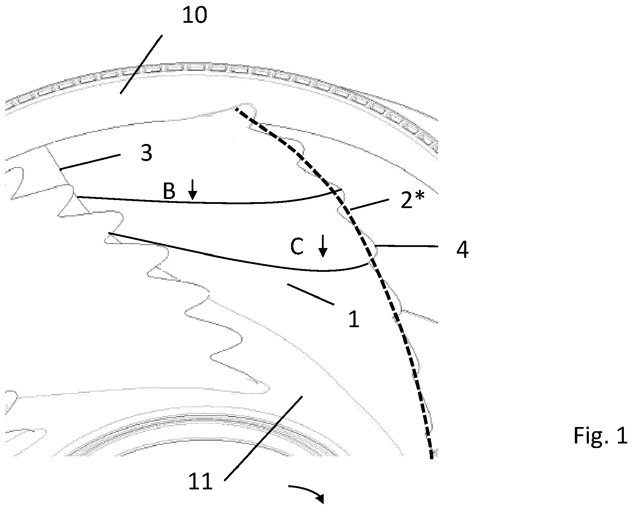

Im Folgenden wird die Erfindung anhand eines Ausführungsbeispiels mit Bezug auf die Figuren 1 bis 6 näher erläutert, wobei gleiche Bezugszeichen in den Figuren auf gleiche strukturelle und/oder funktionale Merkmale hinweisen.

Die Figur 1 zeigt einen Ventilatorflügel 1 mit abschnittsweise gewellter Anströmkante. Der Ventilatorflügel 1 besitzt eine Anströmkante 2, 4 und eine Abströmkante 3 sowie einen zumindest teilweise gewellten Bereich an der Anströmkante, der mit Anströmkante 4 bezeichnet ist, wobei dieser Bereich der Anströmkante 4 eine Welle einer spezifischen Wellenform ausbildet. Mit 2* wird eine theoretische nicht gewellte Anströmkante eines Referenzflügels bezeichnet, die durch einen Verlauf charakterisiert ist, der ohne das Vorhandensein der Welle dann die Form der Anströmkante ergeben würde. Zusätzlich sind drei meridional verlaufende Profilschnittlinien A, B und C eingezeichnet.

Die Position des Profilschnittes A ist so gewählt, dass die Sehnenlänge des Ventilatorflügels 1 mit der gewellten Anströmkante 4 etwa der Sehnenlänge eines Referenzflügels mit einer nicht gewellten Anströmkante 2* entspricht. Die Position des Profilschnittes B ist so gewählt, dass dieser durch einen Wellenberg des Ventilatorflügels 1 mit der gewellten Anströmkante 4 verläuft. Die Position des Profilschnittes C ist so gewählt, dass dieser durch ein Wellental des gewellten Bereiches (4) der Anströmkante des Ventilatorflügels 1verläuft.

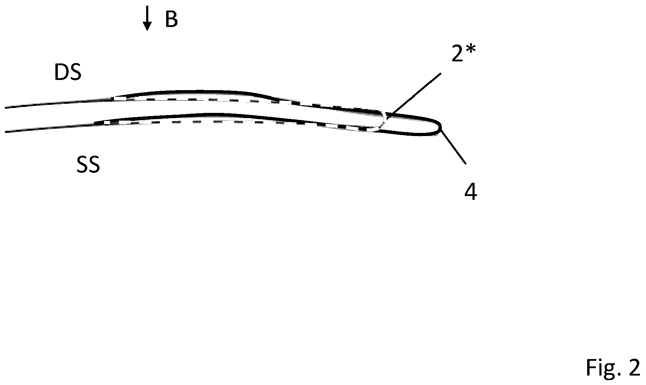

Die Figur 2 ist eine Detailansicht des Profilschnitts B im gewellten Bereich der Anströmkante 4 des Ventilatorflügels 1 zur Erläuterung eines S-förmigen Wellenschlages. Das Profil mit der gewellten Anströmkante 4 verlässt das Referenzprofil mit der nicht gewellten Anströmkante 2* nahe an der Anströmkante Richtung Saugseite SS und weiter stromab in Richtung Druckseite DS. Hierzu besitzt das Flügelprofil eine aus der Druckseite DS hervorstehende Beule und eine auf der Saugseite SS hineinreichende Delle (gegenüber dem gestrichelten Referenzprofil).

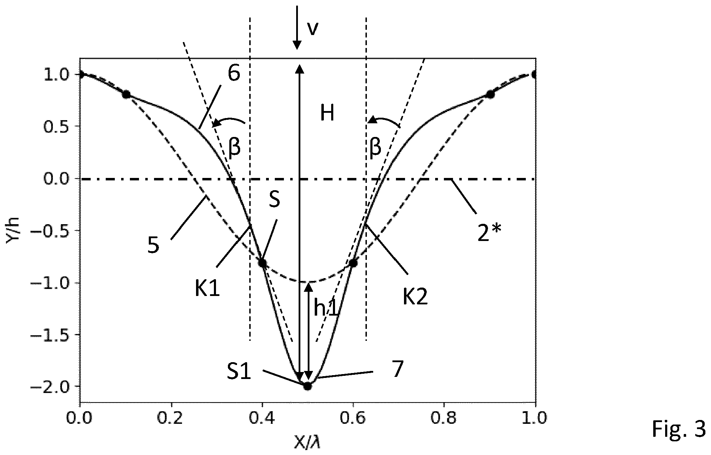

Im Folgenden wird eine Maßnahme beschrieben, wie man die Wellenform an der Anströmkante ausgehend von einer Sinuswelle herleiten bzw. optimieren kann. Die Wellenform wird über mehrere Stützpunkte S der Sinuskurve definiert und der Kurvenverlauf ergibt sich durch eine Spline-Interpolation. Hierzu zeigt die Figur 3 eine schematische Ansicht einer gedachten Sinus-Wellenform 5 an der Anströmkante und einer modifizierten Wellenform 6, die durch sechs Stützpunkte S auf der Sinuswelle 5 und einen zusätzlichen Stützpunkt S1 in der Mitte der Welle verläuft. Der Spitze-Tal-Wert H der Welle 6 ist der Abstand vom höchsten Punkt zum tiefsten Punkt. Die Abweichung von der Sinuswelle wird durch eine Länge h1 und die Wahl der Stützpunkte S definiert. Diese Wellenform 6 bewirkt ein betreffend des Spitze-Tal-Wertes H tiefer eingeschnittenes" Wellental 7 der Wellenform 6.

Im Vergleich zur Sinuswellenform liegen die beiden zum Wellental 7 abfallenden Flanken K1, K2 enger zusammen und deren Anstellwinkel ist bezogen auf die Richtung der Anströmgeschwindigkeit v im Vergleich zur Sinuswelle steiler. Die effektive Anströmgeschwindigkeit, d.h. die Komponente der Anströmgeschwindigkeit v senkrecht zur Anströmkante, mit der die Störung auf die Anströmkante des Ventilatorflügels trifft, ist bei einem steileren Verlauf der Flanken K1, K2 reduziert. Dies führt zu einer effektiveren Reduktion des abgestrahlten Schalls. Bevorzugte Werte für h1 liegen im Bereich 0 < h1 < h mit h= Amplitude der Sinuswelle.

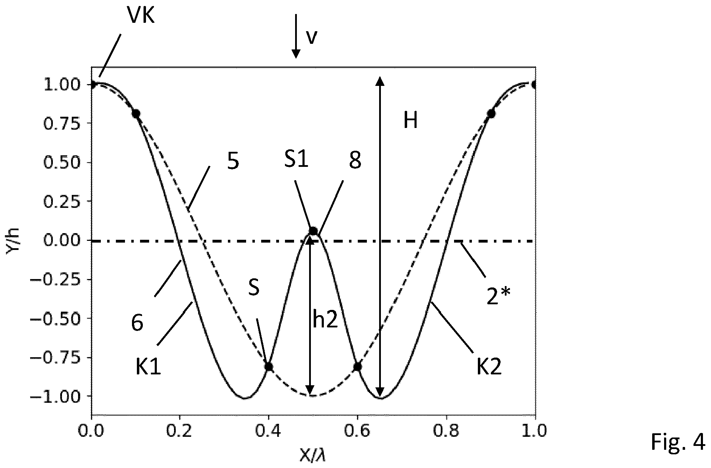

Figur 4 zeigt eine weitere alternative Variation der Lage der Stützpunkte. Der Stützpunkt in der Mitte der Welle wird stromauf entgegen der Anströmrichtung positioniert, so dass sich in der Mitte der Welle ein zusätzlicher Wellenberg 8 ergibt. Die Abweichung von der Sinuswelle wird durch eine Länge h2 und die Wahl der Stützpunkte S definiert. Bevorzugte Werte für h2 liegen im Bereich 0 < h2 < 2 h mit h= Amplitude der Sinuswelle.

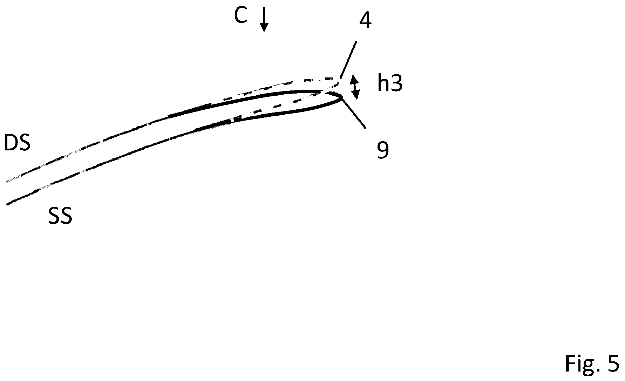

Die Figur 5 ist eine Detailansicht des Profilschnitts C im Bereich der gewellten Anströmkante des Ventilatorflügels 1 zur Erläuterung einer lokalen Anpassung des Flügelprofils im Bereich der Anströmkante auf die Zuströmung.-Der Profilschnitt wird im Bereich der ursprünglichen Anströmkante 4 im Wesentlichen senkrecht zur Mittellinie zwischen Druckseite und Saugseite des Flügels um die Länge h3 in Richtung der Druckseite DS verschoben. Der so angepasste Profilschnitt mit modifizierter Anströmkante 9 verhindert Strömungsablösungen und damit verbundene Geräuschemissionen. Die beschriebene vorteilhafte Anpassung des Profilschnitts liegt vorzugsweise in der Mitte der Welle, d.h. sie kann sowohl im Bereich des zusätzlichen Wellenberges 8 als auch im Bereich des Tals 7 liegen.

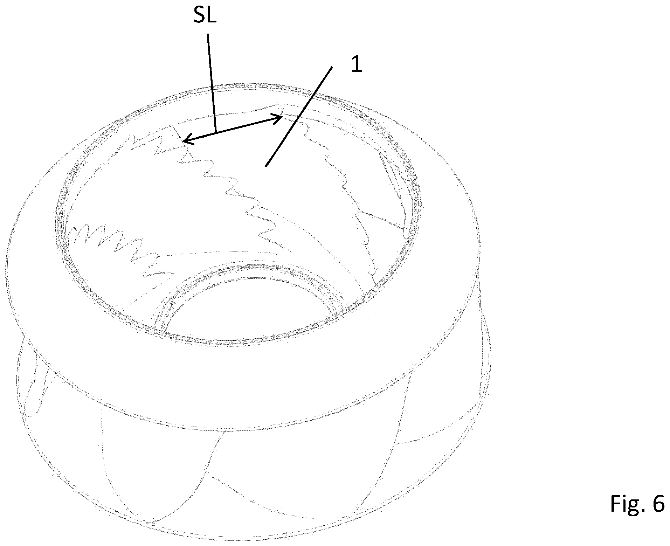

Die Fig. 6 zeigt einen beispielhaften Axialventilator aufweisend fünf Ventilatorflügel 1.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Ventilatorflügel (1) für einen Radialventilator mit einer Anströmkante (2, 4) und einer Abströmkante (3), wobei der Ventilatorflügel (1) zumindest in einem Teilbereich eine gewellte Anströmkante (4) mit einer sich periodisch wiederholenden Wellenform der Periodenlänge λ aufweist, die abweichend von einer sinusförmigen oder nahezu sinusförmigen Wellenform insbesondere abweichend von einer sinusförmigen oder nahezu sinusförmigen Wellenform mit gleicher Periodenlänge λ ist, **dadurch gekennzeichnet, dass** die sich wiederholende Wellenform pro Periode zwei nebeneinander liegende Wellentäler (7) zwischen zwei schräg zur Strömungsrichtung (V) aufeinander zu verlaufende Wellenflanken (K1, K2) ausbildet mit einem zwischen den beiden Wellentälern (7) liegenden Wellenberg (8), der sich entgegen der Strömungsrichtung (V) in Richtung der anströmseitigen Vorderkante (V) erstreckt und der Spitze-Tal-Wert der Welle eines Wellenbergs (8), der unmittelbar zwischen zwei benachbarten Wellentälern (7) liegt, betragsmäßig etwa 10% bis 80% des Spitze-Tal-Wertes des oder der unmittelbar benachbarten Wellenberge (7) beträgt.

2. Ventilatorflügel (1) nach Anspruch 1, **dadurch gekennzeichnet, dass** die gewellte Anströmkante (4) zwei oder mehrere sich periodisch wiederholende Wellenformen aufweist.

3. Ventilatorflügel (1) nach Anspruch 1 oder 2, **dadurch gekennzeichnet, dass** der Spitze-Tal-Wert H der Welle (6) gemessen von der Vorderkante (VK) im Bereich der gewellte Anströmkante (4) bis zum Wellental (7) in Strömungsrichtung (V) betrachtet Werte in Relation auf die Periodenlänge λ aufweist, die im Bereich 0,2 ≤ λ/H ≤ 2 liegen, wobei die Werte entlang der Anströmkante (2) variieren können.

4. Ventilatorflügel (1) nach einem der vorhergehenden Ansprüche, **dadurch gekennzeichnet, dass** der Ventilatorflügel insbesondere im Bereich der gewellte Anströmkante (4) eine Sehnenlänge SL besitzt und der Spitze-Tal-Wert H im Bereich der Wellentäler (7) vorzugsweise ca. 10% - 30% der Sehnenlänge SL beträgt, weiter vorzugsweise 10% bis 20% der Sehnenlänge SL.

5. Ventilatorflügel (1), nach einem der Ansprüche 1 bis 4, **dadurch gekennzeichnet, dass** die sich wiederholende Wellenform pro Periode wenigstens ein Wellental (7) mit zwei aufeinander zu und jeweils schräg zur Strömungsrichtung (V) verlaufende Wellenflanken (K1, K2) ausbildet.

6. Ventilatorflügel (1) nach einem der vorhergehenden Ansprüche, **dadurch gekennzeichnet, dass** die schräg verlaufenden Wellenflanken (K1, K2) in oder nahe ihrer Flankenmitte gegenüber der Strömungsrichtung (V) unter einem Tangentialwinkel β zwischen 15° und 35°, vorzugsweise einem Tangentialwinkel β von 25° bis 30° verlaufen.

7. Ventilatorflügel (1) nach einem der vorhergehenden Ansprüche, **dadurch gekennzeichnet, dass** die gewellte Anströmkante (4), soweit diese einen nicht gewellten Bereich aufweist, zumindest in Bereichen vorhandener Wellenberge (8) entgegen der Strömungsrichtung (V) gegenüber der Anströmkante (2) im nicht gewellten Bereich hervorsteht.

8. Ventilatorflügel (1) nach einem der vorhergehenden Ansprüche, **dadurch gekennzeichnet, dass** das Flügelprofil zumindest in einem Profilschnitt im Bereich eines Wellenbergs (8) betrachtet, jeweils eine aus der Druckseite (DS) hervorstehende Beule und eine Delle an der korrespondierenden gegenüberliegenden Position der Saugseite (SS), deren Oberflächenverlauf jeweils so definiert ist, dass in Strömungsrichtung (V) betrachtet die Oberflächenkrümmung zweimal wechselt.

9. Ventilatorflügel (1) nach einem der vorhergehenden Ansprüche, **dadurch gekennzeichnet, dass** sich das Flügelprofil stirnseitig im Bereich der Anströmkante (4) in einem Profilschnitt betrachtet, weiter zur Saugseite (SS) hin krümmt im Vergleich zu einem oder dem daneben benachbarten weniger zur Saugseite (SS) hin gekrümmten Bereich, vorzugsweise mit einem Abstand einer Periode, weiter vorzugsweise von Periodenmitte zu Periodenmitte.

10. Ventilatorflügel (1) nach einem der vorhergehenden Ansprüche, **dadurch gekennzeichnet, dass** der Ventilatorflügel im Bereich der Anströmkante (2) zumindest abschnittsweise porös ausgebildet ist, vorzugsweise mit einer Verbindung von Druckseite zur Saugseite, z. B. mit einer Vielzahl von durch den Ventilatorflügel durchgehenden Kanälen.

11. Radialventilator aufweisend einen oder mehrere Ventilatorflügel (1) gemäß einem der Ansprüche 1 bis 9.
